# EUROPEAN PATENT SPECIFICATION

(11) **EP 3 095 707 B1**
(45) Date of publication and mention of the grant of the patent: **31.01.2018**
(21) Application number: 16170285.7
(22) Date of filing: 19.05.2016
(51) Int. Cl.: B64D 37/00, B60K 15/03, F02M 37/22, B64D 37/06, B01D 35/00, F02M 37/00, F16K 5/06

(54) **FUEL TANK SYSTEM**
KRAFTSTOFFTANKSYSTEM
SYSTÈME DE RÉSERVOIR DE CARBURANT

(30) Priority: 21.05.2015 GB 201508699
(43) Date of publication of application: 23.11.2016
(73) Proprietor: Airbus Operations Limited, Bristol BS34 7PA (GB)
(72) Inventor: Lisle-Taylor, Stephen, Bristol, BS34 7PA (GB); Lam, Joseph K-W, Bristol, BS34 7PA (GB)
(74) Representative: Ribeiro, James Michael

(56) References cited:
- WO-A1-2014/174247
- DE-A1- 10 138 695
- DE-A1-102011 076 413
- US-A1- 2014 209 749

## Description

### FIELD OF THE INVENTION

The present invention relates to a fuel tank system, typically but not exclusively an aircraft fuel tank system.

### BACKGROUND OF THE INVENTION

Large aircraft, such as the Airbus A380, include several fuel tanks, with fuel being stored in a number of fuel tanks located in the wings of the aircraft. In order to move the fuel from a fuel tank into an engine, or to move fuel between different fuel tanks during flight, an aircraft fuel tank may be provided with fuel transfer pumps. In order to be able to detect whether or not a fuel transfer pump is working, a sensor line may be connected to a feed line leading from the fuel pump outlet, the sensor line leading to a pressure switch associated with the sensor line. The pressure switch may comprise a diaphragm and a certain amount of residual air. When the pump is operational, the feed line pushes the fuel and water mix typically found in an aircraft fuel tank up the sensor line towards the pressure switch compressing the air in the switch. The pressure increase due to the fuel flow pressure, a typical example of which is 30psi, activates the pressure switch and provides a high-pressure signal indicating that the fuel pump is working correctly. If the fuel pressure switch is not activated, a monitoring system may generate a low-pressure signal to inform the aircraft operator that the fuel pump is not working, for example using a warning light and/or audible alarm.

A small amount of water on the internal side of the diaphragm can be sufficient, when expanding on freezing, to push the diaphragm and create a spurious high pressure signal.

A known solution to this problem is presented in US 2014/0209749. A reservoir acts to prevent liquid contacting the pressure switch when the fuel pump is not active.

The present invention seeks to provide an alternative solution to this problem, which can also be applied to any other device which is part of a fuel tank system and which suffers from the problem of water accumulation.

"Unimpeded Permeation of Water Through Helium-Leak-Tight Graphene-Based Membranes", R.R Nair et al, Science, 27 January 2012, Vol. 335, no. 6067, pp. 442-444, DOI:10.1126/science.1211694 (referred to below as "Nair et al") demonstrated that submicrometer-thick membranes made from graphene oxide can be completely impermeable to liquids, vapors, and gases, including helium, but these membranes allow unimpeded permeation of water.

WO2014/174247, which constitutes the closest prior art, describes a tank assembly with a tank for storing liquid hydrocarbon, the tank having a floor for supporting a weight of the liquid hydrocarbon. A filter is fitted to the floor of the tank. The filter is arranged to allow liquid water in the tank to drain out of the tank through the filter but substantially prevent the liquid hydrocarbon in the tank from doing so. The filter has a permeation member, such as a membrane, which is formed from a material such as graphene oxide which allows liquid water in the tank to drain out of the tank by permeating through the permeation member but substantially prevent the liquid hydrocarbon in the tank from doing so.

### SUMMARY OF THE INVENTION

The present invention provides a fuel tank system comprising a fuel tank; a device with a fuel inlet for receiving a fuel/water mix, and a water outlet in fluid communication with the fuel tank; and a filter formed from a water-permeable material which enables water from the fuel/water mix to flow through the water-permeable material and the water outlet into the fuel tank, but substantially prevents liquid fuel in the fuel/water mix from doing so.

The filter typically comprises a permeation member, such as a membrane, which is formed from the water-permeable material. Optionally the filter further comprises a support structure which supports the permeation member.

The water-permeable material may comprise graphene oxide (typically a layered structure of graphene oxide crystallites), a structure with an array of nanoholes, an array of vertically aligned hollow nanotubes such as carbon nanotubes, or any other suitable material which enables water to flow through it but substantially prevents liquid fuel from doing so.

The liquid fuel is typically a liquid hydrocarbon fuel such as gasolene or kerosene.

The fuel tank system may be an aircraft fuel tank system, but the invention may also be implemented in, for example, fuel storage silos or fuel transport trucks.

In one embodiment of the invention the device is a valve comprising a valve chamber with a fuel outlet, wherein the valve chamber is in fluid communication with the fuel inlet, the fuel outlet and the water outlet; and a valve member in the valve chamber for controlling a flow of the fuel/water mix through the valve chamber from the fuel inlet to the fuel outlet.

Optionally the valve member can be moved between an open position in which it enables the fuel/water mix from the fuel inlet to flow through the valve chamber and out of the fuel outlet, and a closed position in which it prevents the fuel/water mix from the fuel inlet flowing through the valve chamber and out of the fuel outlet.

By way of example, the valve may be a ball valve, a gate valve or a butterfly valve. In the case of a ball valve, then typically the valve comprises a valve body with a spherical concave inner surface, the valve member has a spherical convex outer surface, and the ball valve comprises a void between the spherical concave inner surface and the spherical convex outer surface, wherein the water outlet is located in the valve body in fluid communication with the void so that water in the void can flow through the water-permeable material and the water outlet into the fuel tank.

The device may have only one water outlet, or it may comprise first and second water outlets in fluid communication with the fuel tank, each water outlet having an associated filter formed from a water-permeable material which enables water from the fuel/water mix to flow through the water-permeable material and the water outlet into the fuel tank, but substantially prevents liquid fuel in the fuel/water mix from doing so, wherein the first water outlet is positioned at a low point of the device if the valve is in a first orientation, and the second water outlet is positioned at a low point of the device if the valve is in a second orientation.

In other embodiments of the invention the system further comprises a fuel pump; and a pressure sensor, the device is arranged with its fuel inlet in fluid communication with the fuel pump, and the device has a sensor outlet in fluid communication with the pressure sensor so that the device can communicate pressure changes in the fuel pump to the pressure sensor, and the water outlet is arranged so that water can flow from the device through the water outlet and into the fuel tank without flowing through the sensor outlet. For instance the device may be a U-bend, reservoir or plenum.

Typically the water outlet is at a local low point.

The invention is not limited to use in a pressure sensing line or valve body (as in the embodiments of the invention described above) but may be implemented in any device which is part of a fuel tank system and suffers from the problem of water accumulation, such as a pipe, a valve member, an inlet connector for a valve or other component, or an outlet connector for a valve or other component.

### BRIEF DESCRIPTION OF THE DRAWINGS

Embodiments of the invention will now be described with reference to the accompanying drawings, in which:
Figure 1 is a schematic view of an aircraft fuel tank system according to a first embodiment of the invention;
Figure 2 shows an aircraft wing incorporating a fuel tank system as shown in any of the embodiments of the invention;
Figure 3 is a cross sectional view of a fuel pump;
Figure 4 is a cross sectional view of a first configuration of a reservoir;
Figure 5 is a cross sectional view of a second configuration of a reservoir;
Figure 6 is a schematic view of an aircraft fuel tank system according to a second embodiment of the invention;
Figure 7 shows a pressure sensor of the system of Figure 6;
Figure 8 is a cross sectional view of a U-bend fitting of the system of Figure 6;
Figure 9 shows a porous support structure which is part of the U-bend fitting of Figure 8;
Figure 10 is a schematic view of an aircraft fuel tank system according to a third embodiment of the invention;
Figure 11 is a cross sectional view of a plenum of the system of Figure 10;
Figure 12 is a schematic view of an aircraft fuel tank system according to a fourth embodiment of the invention;
Figure 13 is a view of the system of Figure 12 taken along a horizontal cross-section; and
Figure 14 is a side view of the system of Figure 12 showing the locations of four water filters.

### DETAILED DESCRIPTION OF EMBODIMENT(S)

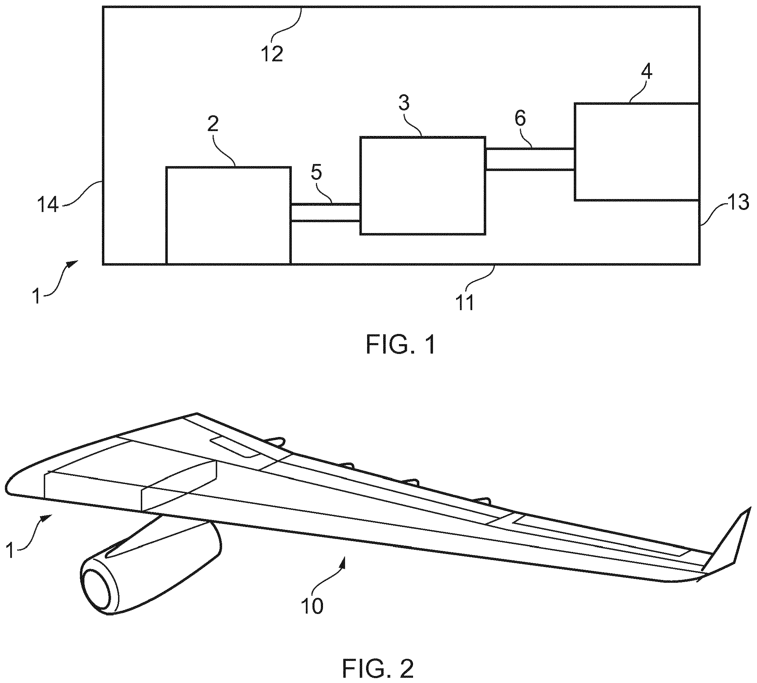

Figure 1 shows a fuel tank system comprising an aircraft fuel tank 1, an aircraft fuel pump 2, a reservoir 3, and a pressure sensor 4. The pump 2 is connected to an inlet of the reservoir 3 by a first section of sensor line 5, also known as the wet sensor line. An outlet of the reservoir 3 is connected with the pressure sensor 4 via a second section of sensor line 6, also known as the dry sensor line. When the pressure sensor 4 is activated it sends a signal to an aircraft control unit (not shown) indicating that the pump 2 is operating correctly.

The tank 1 is part of an aircraft wing 10 shown in Figure 2. The tank has a floor 11 provided by a lower skin of the wing, a cover 12 provided by an upper skin of the wing, a rear wall 13 provided by a rear spar of the wing, and a front wall 14 provided by a front spar of the wing.

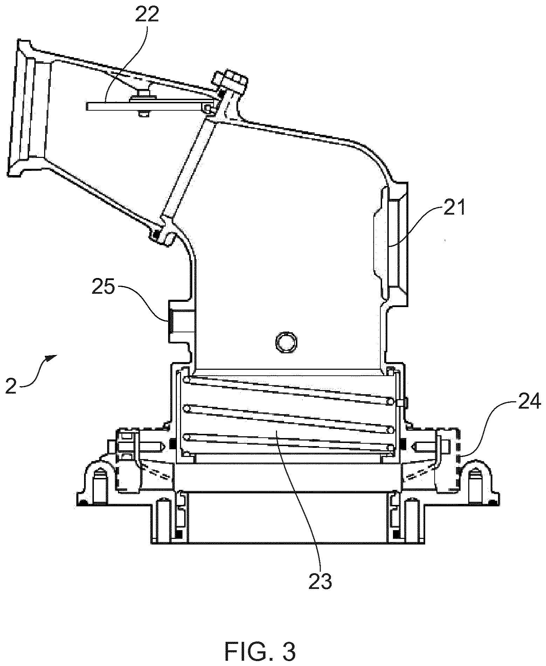

Figure 3 shows a cross sectional view of the pump 2. The pump 2 has an outlet 21 to a jet pump, an outlet check valve 22, a slide valve 23 (shown open), a fuel inlet and strainer 24, and an outlet 25 which leads to the reservoir 3 via the wet sensor line 5.

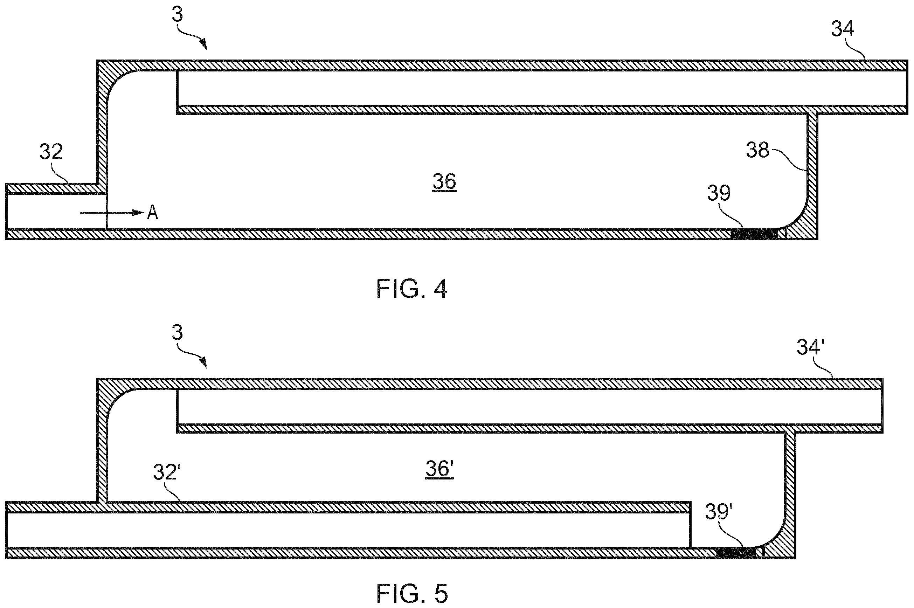

Figure 4 shows a cross sectional view of a first possible internal configuration of the reservoir 3. The reservoir has a fuel inlet 32 for receiving a fuel/water mix from the wet sensor line 5. The fuel inlet 32 feeds into a sump 36, the sump 36 extending in the same direction as the fluid flow through the input 32. The direction of flow through the input 32 is indicated by the arrow A. A sensor outlet 34 of the reservoir is offset from the inlet 32, and runs in a parallel direction to the inlet 32. As can be seen in Figure 4, the sump extends beyond the opening of the sensor outlet 34 in what may be considered a "downstream" direction. Therefore, a fuel/water mix entering the reservoir via the fuel inlet 32 will first travel to a rear end 38 of the sump 36, and fill the sump 36, before being able to travel out of the reservoir via the sensor outlet 34. The reservoir is arranged such that when the fuel pump system is installed in the aircraft fuel tank, the fuel inlet 32 is generally arranged to be oriented below the sensor outlet 34 when the aircraft is at an approximately level pitch. During a flight, a change of pitch of the aircraft to which the system is installed may result in the fuel inlet 32 being oriented above the sensor outlet 34, but the configuration of the reservoir 3 is such that the fuel/water mix should not pass beyond the reservoir 3 towards the pressure switch 4.

As the pump 2 is activated, a fuel/water mix is transmitted into the reservoir 3 via the sensor inlet 32. Air present in the sump 36 will be displaced, compressing the air present in the sensor outlet 34, the compression of which goes on to activate the pressure switch 4. The amount of air present in the system preferably does not allow the fuel/water mix entering the sump 36 to pass through the reservoir 3, due to the level of compression of the air being required being too great to be achieved by the aircraft fuel pump.

A water outlet hole in fluid communication with the fuel tank is formed in the base 37 of the sump 36, towards its rear end 38. The water outlet hole is filled with a filter 39. The filter 39 is formed from a water-permeable material which enables water in the sump 36 to flow through the water-permeable material and the water outlet hole into the fuel tank, but substantially prevents liquid fuel in the sump from doing so.

The reservoir is mounted in the fuel tank so that when the aircraft is on the ground then the base 37 of the reservoir is pitched up slightly so that the filter 39 will be at a low point.

The filter 39 comprises a permeation member, such as a membrane, which is formed from a material which allows liquid water in the reservoir to permeate through it but substantially prevents the liquid hydrocarbon fuel in the reservoir from doing so. For instance the permeation member may comprise graphene oxide (typically a layered structure of graphene oxide crystallites), a structure with an array of nanoholes, or an array of vertically aligned hollow nanotubes such as carbon nanotubes.

The water outlet hole should be no more than 5mm in diameter. With such a small opening, the most practical solution to fit the filter 39 is a push-fit approach. Therefore in a preferred embodiment the filter 39 consists of a block of graphene oxide which is shaped and sized such that it can be push-fit into the water outlet hole. The ends of the graphene oxide block may be trimmed off such that they are flush with the upper and lower surfaces of the base 37 of the reservoir.

The graphene oxide block may be manufactured by 3D printing as reported in http://www.3ders.org/articles/20141225-korean-researchers-expect-to-commercialize-graphene-3d-nano-printers-in-three-years.html; and also in Kim, Jung Hyun, Won Suk Chang, Daeho Kim, Jong Ryul Yang, Joong Tark Han, Geon-Woong Lee, Ji Tae Kim, and Seung Kwon Seol. "3D Printing of Reduced Graphene Oxide Nanowires." Advanced Materials 27, no. 1 (2015): 157-161.

Alternatively the graphene oxide block may be made of freeze-dried carbon and graphene oxide as described in http://www.dailymail.co.uk/sciencetech/article-2296223/Lightest-material-Graphene-aerogel-balanced-atop-petals-flower.html.

Alternatively the filter 39 may comprise a graphene based membrane as described in Nair et al.

Figure 5 shows a cross-sectional view of a second possible internal configuration of the reservoir 3. The sensor outlet 34' is configured in the same way as in Figure 4, but the fuel inlet 32' extends into the sump 36' as shown. As described above, air within the reservoir acts under compression so as to prevent the passage of fuel/water mix through the reservoir. A filter 39' identical to the filter 39 is fitted to the base of the sump in the same position as the filter 39 in Figure 4.

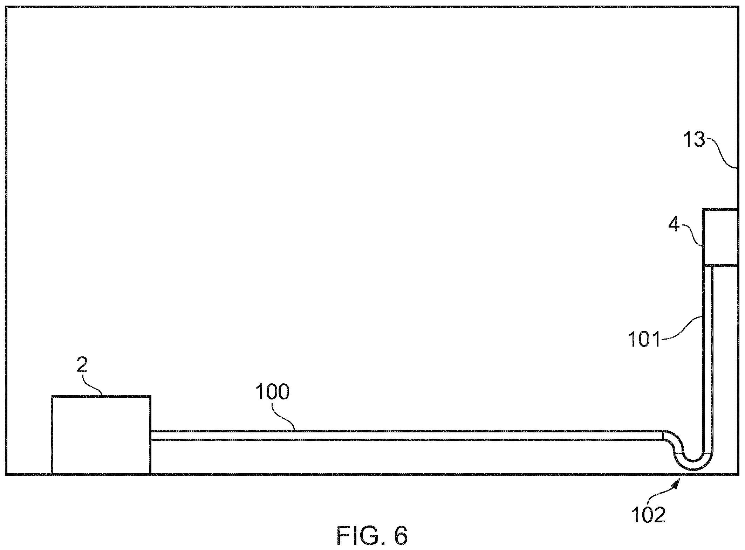

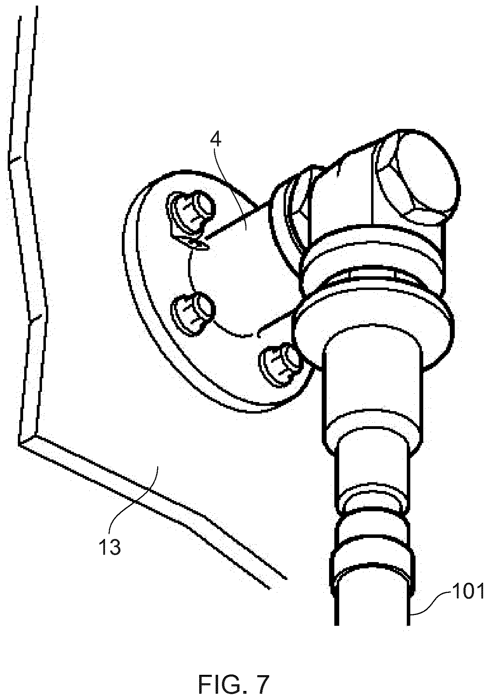

Figure 6 shows a fuel tank system according to a further embodiment of the present invention. Many of the components in Figure 6 are identical to the components in Figure 1 and in this case the same reference numerals will be used. The fuel pump 2 is connected to the pressure sensor 4 by a horizontal section of sensing line 100, a vertical section of sensing line 101, and a U-bend fitting 102. Figure 7 shows the rear wall 13 of the fuel tank carrying the pressure sensor 4 and also shows the vertical portion 101 of the sensing line.

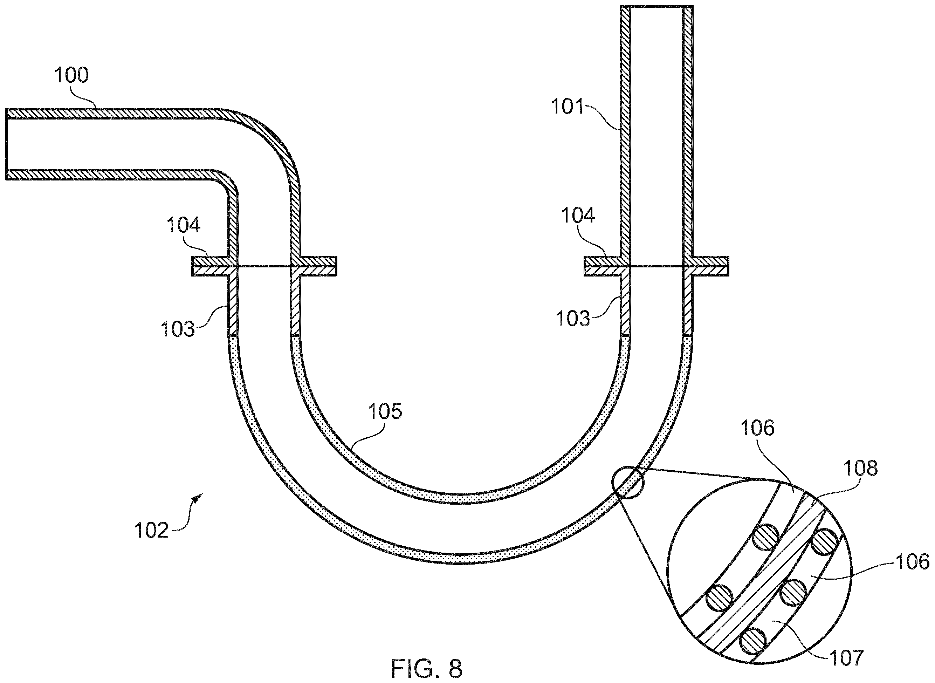

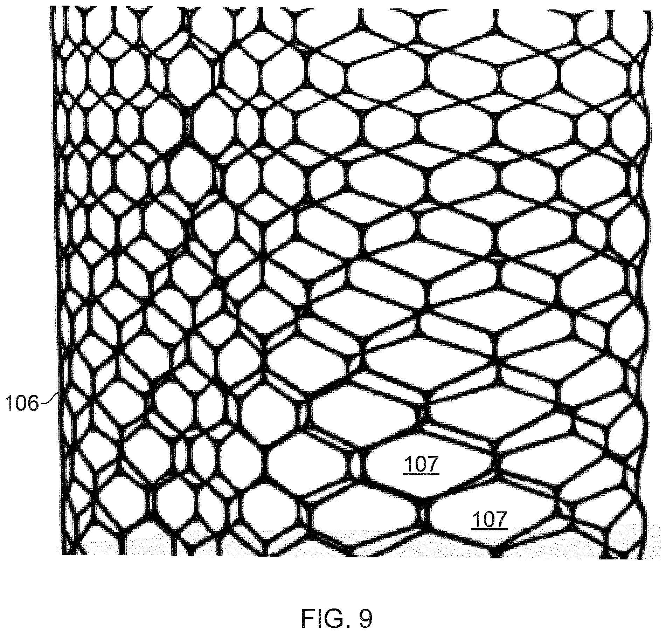

Figure 8 is a detailed cross-sectional view showing the U-bend fitting 102. The U-bend fitting 102 has flanged end connectors 103 which connect to flanges 104 of the sensing lines 100, 101. The low point of the U-bend fitting is formed by a curved filter pipe 105 connected at each end to the end fittings 103. The curved filter pipe 105 has a layered structure comprising a tube 108 of water-permeable material sandwiched between a pair of support tubes 106. Each support tube 106 has a honeycomb structure as shown in Figure 9 with pores 107. The support tubes 106 are attached at each end to the end connectors 103, for instance by a bonded connection. The tube 108 of water-permeable material enables water in the filter pipe 105 to flow through the water-permeable material and the pores 107 of the support tubes 106 into the fuel tank, but substantially prevents liquid fuel from doing so.

As can be seen in Figure 6, the U-bend fitting 102 is mounted at a local low point of the sensing line between the pump 2 and the pressure sensor 4 so that water in the sensing line will tend to flow to the low point of the filter pipe 105 before permeating into the fuel tank.

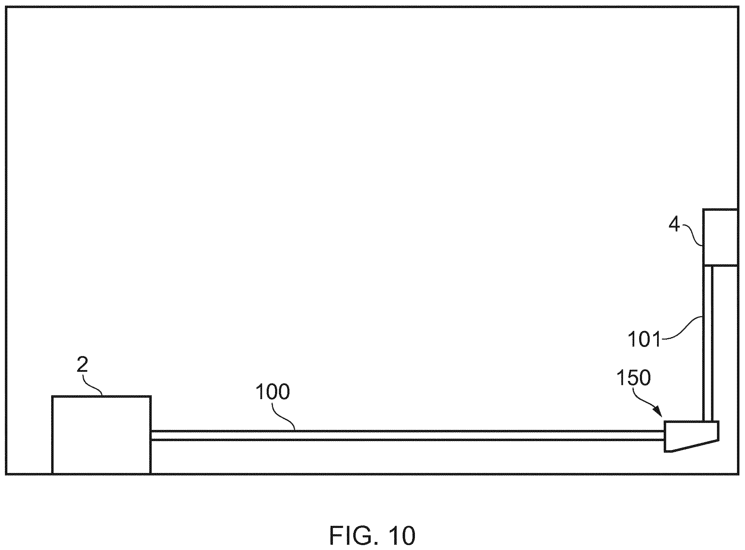

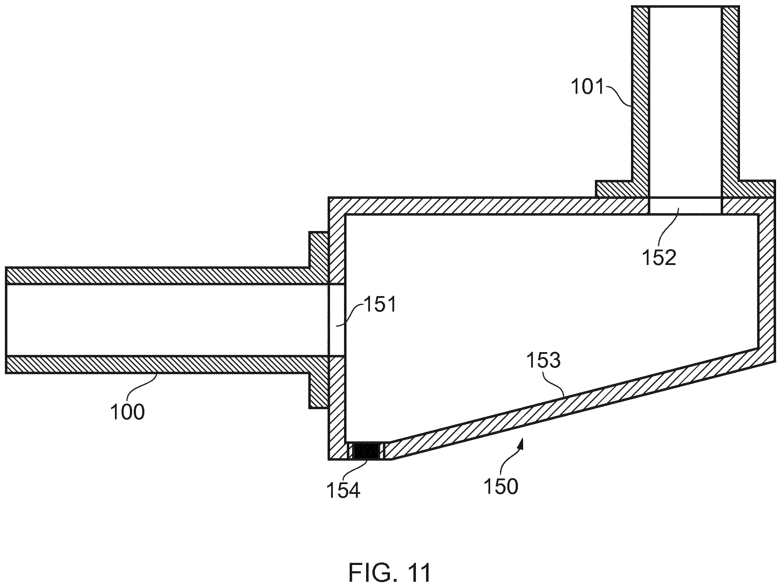

Figure 10 shows a further alternative embodiment which is similar to the embodiment of Figures 6-9 except that the U-bend fitting 102 is replaced by a plenum 150 shown in detail in Figure 11. The plenum 150 has a fuel inlet 151 coupled to the horizontal sensing line 100 and a sensor outlet 152 coupled to the vertical sensing line 101. The floor 153 of the plenum is angled down towards a local low point which contains a filter 154 covering a water outlet hole in fluid communication with the fuel tank. The filter 154 is identical to the filter 39 in the embodiment of Figure 4: that is, it comprises a permeation member formed from a water-permeable material which enables water in the plenum 150 to flow through the water-permeable material and the water outlet hole into the fuel tank, but substantially prevents liquid fuel in the plenum from doing so.

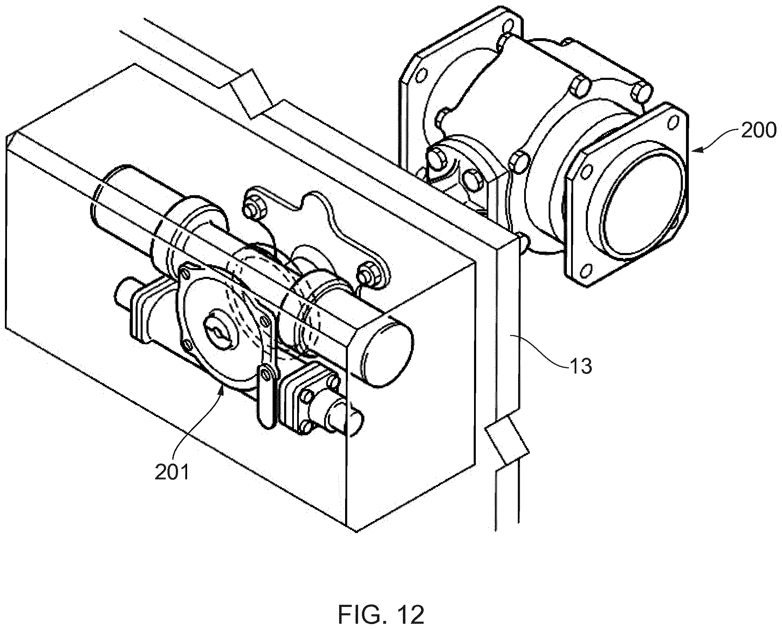

Figure 12 shows a fuel tank system according to a further embodiment of the present invention. The spar 13 carries a valve 200 on its "wet" side (inside the fuel tank) and an actuator 201 on its "dry" side (outside the fuel tank).

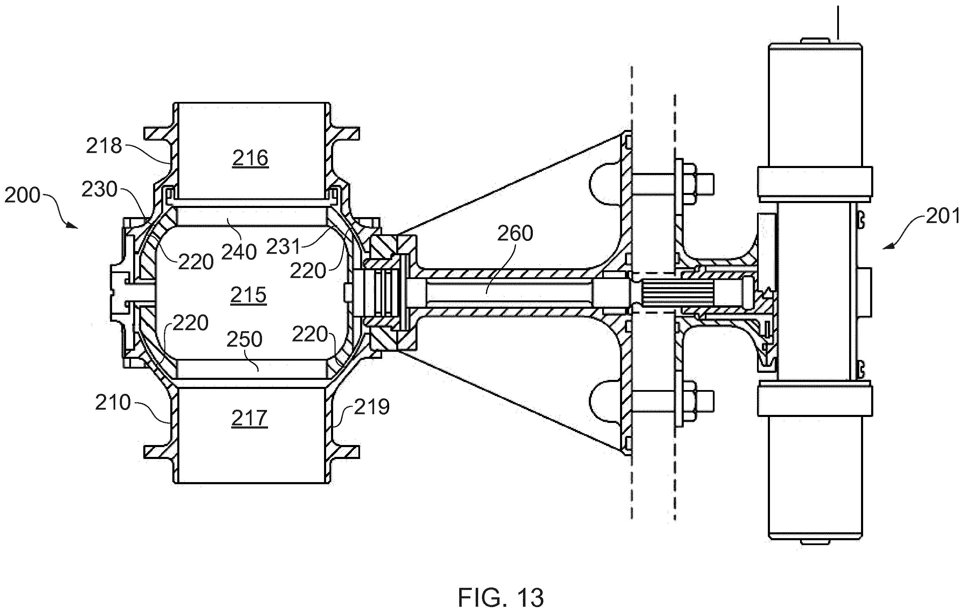

Figure 13 is a detailed cross-sectional view of the fuel tank system of Figure 12. The valve comprises a valve body 210 with a valve chamber 215. The valve chamber 215 has a fuel inlet 216 for receiving a fuel/water mix from an inlet connector 218, and a fuel outlet 217 for feeding the fuel/water mix to an outlet connector 219. The connectors 218, 219 have flanges for connection to pipes (not shown) running through the fuel tank.

The valve chamber 215 has spherical concave internal surfaces 220. A ball valve member 231 is mounted in the valve chamber and has spherical convex surfaces 230 which oppose the internal surfaces 220 of the valve chamber. The ball valve member 231 has a passageway with an inlet 240 and an outlet 250. In Figure 13 the passageway is shown in an open position in which it is aligned with the outlets 216, 217 of the valve chamber. The actuator 201 can rotate the ball valve member via a valve spindle 260 by a quarter turn from the open position shown in Figure 13 in which the passageway enables the fuel/water mix from the fuel inlet 216 to flow through the valve chamber and out of the fuel outlet 217, and a closed position in which it prevents the fuel/water mix from the fuel inlet 216 flowing through the valve chamber and out of the fuel outlet 217.

A thin spherical void exists between the opposed spherical surfaces 220, 230. A sealing ring 221 is fitted to an outlet end of the inlet connector 218. When the ball valve member is in its open position as shown in Figure 13, the sealing ring 221 forms a seal with the ball valve member which prevents liquid entering the void. Optionally a similar sealing ring may also be fitted to the inlet end of the outlet connector 219. Although the sealing ring 221 is designed to inhibit the flow of liquid into the void between the opposed spherical surfaces 220, 230, it cannot entirely prevent it and liquid (a fuel/water mix) can enter the void particularly as the ball valve member rotates between its open and closed positions. The water in the fuel/water mix can then flow to the low point of the void where it may freeze and lock the valve.

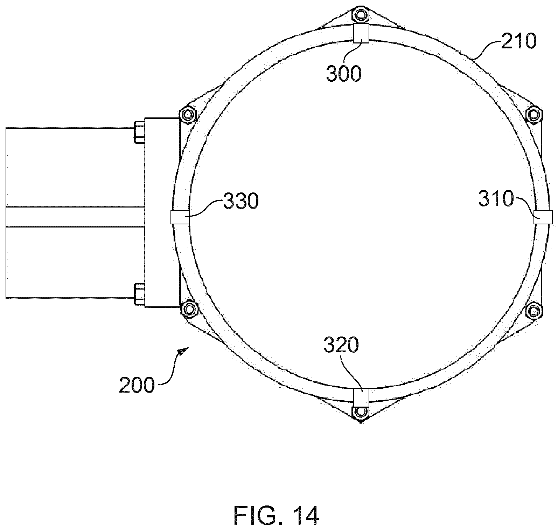

Figure 14 is an end view of the valve which schematically indicates the positions of four filters which are mounted in the valve body 210. The valve body 210 is formed with four water outlet holes in fluid communication with the void between the opposed spherical surfaces 220, 230. The water outlet holes are separated as shown in Figure 14, and each outlet hole is filled by a respective filter 300, 310, 320, 330.

When the valve is mounted in the orientation of Figure 14, the filter 320 is at a low point of the spherical valve chamber 215. Providing four water outlet holes (rather than one) enables the valve to be mounted in three alternative orientations in which one of the other three outlet holes is at a low point of the valve chamber.

Providing a water outlet hole at the low point of the valve chamber 215 enables any such water to flow from the valve chamber through the water outlet hole and into the fuel tank. The filters 300, 310, 320, 330 are similar to the filters 39, 154 in the previous embodiments, each comprising a permeation member, such as a membrane, which is formed from a material which allows liquid water to permeate through it but substantially prevents the liquid hydrocarbon fuel in the fuel/water mix from doing so.

In the embodiment described above, water filters are fitted into the spherical valve body 210 in order to drain the void between the opposed spherical surfaces 220, 230. In another embodiment, an additional water-permeable filter may also be fitted into the ball valve member 31 so that water (but not fuel) can flow through the additional water-permeable filter from the passageway 240, 250 in the ball valve member into the void.

When the valve is closed, then water can also accumulate in the fuel inlet 216 or the fuel outlet 217. This water can be drained into the fuel tank by fitting additional water-permeable filters into the inlet/outlet connectors 218, 219.

Although the invention has been described above with reference to one or more preferred embodiments, it will be appreciated that various changes or modifications may be made without departing from the scope of the invention as defined in the appended claims.

## Claims

1. A fuel tank system comprising a fuel tank (1); a device with a fuel inlet (32) for receiving a fuel/water mix, and a water outlet in fluid communication with the fuel tank (1); and a filter (39) formed from a water-permeable material which enables water from the fuel/water mix to flow through the water-permeable material and the water outlet into the fuel tank (1), but substantially prevents liquid fuel in the fuel/water mix from doing so.

2. The system of claim 1 wherein the device is a valve (200) comprising a valve chamber (215) with a fuel outlet (217), wherein the valve chamber (215) is in fluid communication with the fuel inlet (216), the fuel outlet (217) and the water outlet; and a valve member in the valve chamber (215) for controlling a flow of the fuel/water mix through the valve chamber (215) from the fuel inlet (216) to the fuel outlet (217).

3. The system of claim 2 wherein the valve member can be moved between an open position in which it enables the fuel/water mix from the fuel inlet (216) to flow through the valve chamber (215) and out of the fuel outlet (217), and a closed position in which it prevents the fuel/water mix from the fuel inlet (216) flowing through the valve chamber (215) and out of the fuel outlet (217).

4. The system of claim 3 wherein the valve is a ball valve comprising a valve body (210) with a spherical concave inner surface (220), the valve member has a spherical convex outer surface (230), and the ball valve comprises a void between the spherical concave inner surface (220) and the spherical convex outer surface (230), wherein the water outlet is located in the valve body (210) in fluid communication with the void so that water in the void can flow through the water-permeable material and the water outlet into the fuel tank (1).

5. The system of any preceding claim wherein the device has first and second water outlets in fluid communication with the fuel tank (1), each water outlet having an associated filter (39) formed from a water-permeable material which enables water from the fuel/water mix to flow through the water-permeable material and the water outlet into the fuel tank (1), but substantially prevents liquid fuel in the fuel/water mix from doing so, wherein the first water outlet is positioned at a low point if the device is in a first orientation, and the second water outlet is positioned at a low point if the device is in a second orientation.

6. The system of claim 1 further comprising a fuel pump (2); and a pressure sensor (4), wherein the device is arranged with its fuel inlet (32) in fluid communication with the fuel pump (2), and the device has a sensor outlet in fluid communication with the pressure sensor (4) so that the device can communicate pressure changes in the fuel pump (2) to the pressure sensor (4), and the water outlet is arranged so that water can flow from the device through the water outlet and into the fuel tank (1) without flowing through the sensor outlet.

7. The system of claim 6 wherein the device comprises a U-bend (102).

8. The system of claim 6 wherein the device comprises a reservoir (3).

9. The system of claim 6 wherein the device comprises a plenum (150).

10. The system of any preceding claim wherein the water outlet is at a local low point.

11. The system of any preceding claim wherein the water-permeable material comprises graphene oxide.

12. The system of any preceding claim wherein the fuel tank system is an aircraft fuel tank system.

13. An aircraft wing (10) comprising a fuel tank system according to any preceding claim.

## Patentansprüche

1. Kraftstofftanksystem, umfassend einen Kraftstofftank (1), eine Vorrichtung mit einem Kraftstoffeinlass (32) zur Aufnahme einer Kraftstoff/Wasser-Mischung und einem Wasserauslass in Fließverbindung mit dem Kraftstofftank (1) und einen Filter (39), der aus einem wasserdurchlässigen Material ausgebildet ist, welches ermöglicht, dass Wasser aus der Kraftstoff/Wasser-Mischung durch das wasserdurchlässige Material und den Wasserauslass in den Kraftstofftank (1) fließt, aber im Wesentlichen verhindert, dass flüssiger Kraftstoff in der Kraftstoff/Wasser-Mischung dies ebenso tut.

2. System nach Anspruch 1, wobei die Vorrichtung ein Ventil (200) ist, umfassend eine Ventilkammer (215) mit einem Kraftstoffauslass (217), wobei die Ventilkammer (215) in Fließverbindung mit dem Kraftstoffeinlass (216), dem Kraftstoffauslass (217) und dem Wasserauslass steht, und ein Ventilelement in der Ventilkammer (215) zur Steuerung des Durchflusses der Kraftstoff/Wasser-Mischung durch die Ventilkammer (215) vom Kraftstoffeinlass (216) zum Kraftstoffauslass (217).

3. System nach Anspruch 2, wobei das Ventilelement zwischen einer offenen Position, in der es ermöglicht, dass die Kraftstoff/Wasser-Mischung vom Kraftstoffeinlass (216) durch die Ventilkammer (215) und aus dem Kraftstoffauslass (217) fließt, und einer geschlossene Position bewegt werden kann, in der es verhindert, dass die Kraftstoff/Wasser-Mischung vom Kraftstoffeinlass (216) durch die Ventilkammer (215) und aus dem Kraftstoffauslass (217) fließt.

4. System nach Anspruch 3, wobei das Ventil ein Kugelventil ist, umfassend einen Ventilkörper (210) mit einer sphärischen konkaven inneren Oberfläche (220), wobei das Ventilelement eine sphärische konvexe äußere Oberfläche (230) aufweist, und das Kugelventil einen Hohlraum zwischen der sphärischen konkaven inneren Oberfläche (220) und der sphärischen konvexen äußeren Oberfläche (230) umfasst, wobei der Wasserauslass im Ventilkörper (210) in Fließverbindung mit dem Hohlraum angeordnet ist, so dass Wasser im Hohlraum durch das wasserdurchlässige Material und den Wasserauslass in den Kraftstofftank (1) fließen kann.

5. System nach einem der vorherigen Ansprüche, wobei die Vorrichtung erste und zweite Wasserauslässe in Fließverbindung mit dem Kraftstofftank (1) aufweist, wobei jeder Wasserauslass einen zugehörigen Filter (39) aufweist, der aus einem wasserdurchlässigen Material ausgebildet ist, welches ermöglicht, dass Wasser aus der Kraftstoff/Wasser-Mischung durch das wasserdurchlässige Material und den Wasserauslass in den Kraftstofftank (1) fließt, aber im Wesentlichen verhindert, dass flüssiger Kraftstoff in der Kraftstoff/Wasser-Mischung dies ebenso tut, wobei der erste Wasserauslass an einem niedrigen Punkt angeordnet ist, wenn sich die Vorrichtung in einer ersten Orientierung befindet, und der zweite Wasserauslass an einem niedrigen Punkt angeordnet ist, wenn sich die Vorrichtung in einer zweiten Orientierung befindet.

6. System nach Anspruch 1, ferner umfassend eine Kraftstoffpumpe (2) und einen Drucksensor (4), wobei die Vorrichtung mit seinem Kraftstoffeinlass (32) in Fließverbindung mit der Kraftstoffpumpe (2) angeordnet ist und die Vorrichtung einen Sensorauslass in Fließverbindung mit dem Drucksensor (4) aufweist, so dass die Vorrichtung Druckänderungen in der Kraftstoffpumpe (2) an den Drucksensor (4) kommunizieren kann, und der Wasserauslass so angeordnet ist, dass Wasser von der Vorrichtung durch dem Wasserauslass und in den Kraftstofftank (1) fließen kann, ohne durch den Sensorauslass zu fließen.

7. System nach Anspruch 6, wobei die Vorrichtung eine U-Biegung (102) umfasst.

8. System nach Anspruch 6, wobei die Vorrichtung ein Reservoir (3) umfasst.

9. System nach Anspruch 6, wobei die Vorrichtung eine Kammer (150) umfasst.

10. System nach einem der vorherigen Ansprüche, wobei sich der Wasserauslass an einem niedrigen Ortspunkt befindet.

11. System nach einem der vorherigen Ansprüche, wobei das wasserdurchlässige Material Graphenoxid umfasst.

12. System nach einem der vorherigen Ansprüche, wobei das Kraftstofftanksystem ein Flugzeugkraftstofftanksystem ist.

13. Flugzeugflügel (10), umfassend ein Kraftstofftanksystem nach einem der vorherigen Ansprüche.

## Revendications

1. Système de réservoir de carburant comprenant un réservoir de carburant (1) ; un dispositif équipé d'une arrivée de carburant (32) prévu pour recevoir un mélange carburant/eau, et une sortie d'eau communiquant avec le réservoir de carburant (1) ; et un filtre (39) fabriqué dans une matière perméable à l'eau, permettant à l'eau présente dans le mélange carburant/eau de s'écouler à travers la matière perméable à l'eau et la sortie d'eau jusque dans le réservoir de carburant (1), mais empêchant substantiellement le carburant liquide du mélange carburant/eau de passer.

2. Système selon la revendication 1, dans lequel le dispositif est une soupape (200) comprenant une boîte de soupape (215) comportant une sortie de carburant (217), dans lequel la boîte de soupape (215) communique avec l'arrivée de carburant (216), la sortie de carburant (217) et la sortie d'eau ; et une soupape, dans la boîte de soupape (215) pour contrôler le débit du mélange carburant/eau traversant la boîte de soupape (215) depuis l'arrivée de carburant (216) vers la sortie de carburant (217).

3. Système selon la revendication 2, dans lequel la soupape peut passer, d'une position ouverte dans laquelle elle permet au mélange carburant/eau provenant de l'arrivée de carburant (216) de s'écouler à travers la boîte de soupape (215) jusqu'à la sortie de carburant (217), à une position fermée dans laquelle elle empêche le mélange carburant/eau provenant de l'arrivée de carburant (216) de s'écouler à travers la boîte de soupape (215) jusqu'à la sortie de carburant (217).

4. Système selon la revendication 3, dans lequel la soupape est une soupape à bille comprenant un corps de soupape (210) présentant une surface intérieure concave sphérique (220), la soupape ayant une surface extérieure convexe sphérique (230), et la soupape à bille comprenant un espace vide entre la surface intérieure concave sphérique (220) et la surface extérieure convexe sphérique (230), où se situe la sortie d'eau à l'intérieur du corps de soupape (210), communiquant avec le vide, de façon à ce que l'eau se trouvant dans le vide puisse s'écouler à travers la matière perméable à l'eau et la sortie d'eau, jusque dans le réservoir de carburant (1).

5. Système selon l'une quelconque des revendications précédentes, dans lequel le dispositif comporte une première et une deuxième sorties d'eau communiquant avec le réservoir de carburant (1), chaque sortie d'eau comportant un filtre (39) fabriqué dans une matière perméable à l'eau permettant à l'eau du mélange carburant/eau de s'écouler à travers la matière perméable à l'eau et la sortie d'eau vers le réservoir de carburant (1), mais empêchant substantiellement le carburant liquide du mélange carburant/eau de faire de même, dans lequel la première sortie d'eau est placée à un point bas si le dispositif se trouve dans une première orientation, et la seconde sortie d'eau est placée à un point bas si le dispositif se trouve dans une seconde orientation.

6. Système selon la revendication 1, comprenant en outre une pompe à carburant (2) ; et un capteur de pression (4), dans lequel le dispositif est disposé de sorte que son arrivée de carburant (32) communique avec la pompe à carburant (2), et le dispositif comprend une sortie de capteur communiquant avec le capteur de pression (4), de sorte que le dispositif puisse communiquer les modifications de pression se produisant à l'intérieur de la pompe à carburant (2) au capteur de pression (4), et la sortie d'eau est disposée de sorte que l'eau puisse s'écouler depuis le dispositif en passant à travers la sortie d'eau et jusque dans le réservoir de carburant (1) sans traverser la sortie de capteur.

7. Système selon la revendication 6, dans lequel le dispositif comprend un coude en U (102).

8. Système selon la revendication 6, dans lequel le dispositif comprend un réservoir (3).

9. Système selon la revendication 6, dans lequel le dispositif comprend un plénum (150).

10. Système selon l'une quelconque des revendications précédentes, dans lequel la sortie d'eau se situe au niveau d'un point bas local.

11. Système selon l'une quelconque des revendications précédentes, dans lequel la matière perméable à l'eau comprend de l'oxyde de graphène.

12. Système selon l'une quelconque des revendications précédentes, dans lequel le système de réservoir de carburant est un système de réservoir de carburant d'aéronef.

13. Aile d'aéronef (10) comportant un système de réservoir de carburant selon l'une quelconque des revendications précédentes.
